# EUROPEAN PATENT SPECIFICATION

(11) **EP 0 563 184 B1**
(45) Date of publication and mention of the grant of the patent: **13.07.1994**
(21) Application number: 92901782.0
(22) Date of filing: 16.12.1991
(51) Int. Cl.: B65D 75/58

(54) **SAUSAGE-SHAPED FOOD PRODUCT**
WURSTÄHNLICHES NAHRUNGSMITTEL
PRODUIT ALIMENTAIRE SOUS FORME DE SAUCISSE

(30) Priority: 14.12.1990 NL 9002760
(43) Date of publication of application: 06.10.1993
(73) Proprietor: Krehalon Industrie B.V., NL-7418 EE Deventer (NL)
(72) Inventor: ZIJLSTRA, Albert, NL-7418 EE Deventer (NL)
(74) Representative: Ferguson, Alexander
(86) International application number: NL9100264
(87) International publication number: WO9210411

(56) References cited:
- EP-A- 0 060 411
- EP-A- 0 307 194
- US-A- 3 396 900
- US-A- 3 520 469
- US-A- 3 528 601

## Description

The invention relates to a food product comprising a foil-like sheath as well as an edible substance enveloped therein, such as sausage meat or cheese, which is e.g. in a plastic state.

In many cases such products are supplied in a tubular form, their extremities being closed by means of small clips. The sheath is usually made of synthetic material, such as PVDC, nylon or polyester. Consumers will mostly need a knife to open the sheath. However, this may be unwished-for and hazardous indeed when the consumer in question is not fully physically competent to do so, as may be the case with e.g. children or the elderly.

In the past already several possible solutions to this problem have been suggested. One such solution is provided on a sausage-shaped food product as described in the preamble of claim 1, and realized in a food product available on the market and manufactured by Rupp / Brequenz. According to this solution a cap is stuck onto an extremity of a (seamless) tubular sheath using hot-melt glue. By turning said cap the sheath must be ripped open. The inside of the cap is provided with sharp points to ensure the opening of the sheath. Nevertheless, this solution is rather expensive, and moreover, it produces relatively more waste material, not to mention the risk of the consumer being injured by the sharp points.

According to another solution, reference being made to e.g. US patent specifications 3,528,601 and 4,765,117, which disclose a tubular sheath that is obtained by overlapping the edges of sheets of synthetic foil and by connecting them to one another so as to form longitudinal seam, pull strips are welded onto the sheets of synthetic foil prior to the formation of the tube. However, this solution does not serve the purpose in just any case, e.g. not in the case of seamless, tubular sheaths. These seamless, tubular sheaths are obtained by means of extrusion, after which a tube of considerable length is shirred and placed on a stuffing mandrel. When the sheath is being unshirred, it is filled with edible substance and subsequently divided into separate sausage-shaped units. As the sheath is to be shirred, it is not possible to apply any pull strips onto the sheath prior to the filling operation. Nor is there a proper way to weld the pull strips onto the sheaths after the filling operation, as the sheaths are liable to damage, and as a result it may occur that the contents will be squeezed out of the sheath. In this respect, it should also be considered that the sheaths are usually made of shrink-foil, so that a heat-welding operation will result in irregularities on the surface of the foil, either in a flat or tubular state.

The main object of the invention is to provide measures according to which the sheath of the food product as mentioned in the preamble of claim 1 can be opened very easily.

To this end, the invention provides a food product as described in claim 1.

The measures according to the invention provide the consumer with uncomplicated means for opening the sheath which can be applied onto filled sheaths by a simple and rapid process, without any risk of damage.

There are a number of requirements, whether or not combined, which should be met by the bonding agent. For example, a (very) short setting time is desired for a fast production. Considering their long drying and setting time, water-soluble adhesives and epoxy adhesives do not serve the purpose. Furthermore, as it concerns edible goods, it is required that the adhesive is solvent-free, so that no migration of these substances to the contents of the sheath can occur. Also migration of other substances of the adhesive, such as monomers, should be restricted as much as possible. Moreover, it is preferred that the adhesive is very effective, so that a maximum ratio of adhesion strength to adhesion surface can be obtained by using only a small quantity. Such adhesives often appear to be rather expensive, especially in comparison with the costs of the sheath itself.

In addition to that, it may be required that the adhesive is resistant to plasticizers, depending on the material being used for the sheath. For example, PVDC can contain plasticizers that counteract the adhering effect of the adhesive. Moreover, it is preferred that the adhesive is not toxic. It should also be avoided that (too much) heat has to be applied in order to effect adequate adhesion strength. As in most cases the type of foil used for the sheath is, as usual, shrink-foil, application of various glues activated by heat, the so-called hot-melt glues, can cause visible shrink-wrinkle formation in the otherwise tight sheath. In any case, the adhesion strength of the hot-melt glue on the PVDC-foil that is often used for food products such as sausages will not always be satisfactory. Finally, according to the last item on this inexhaustible list of possible requirements, it is preferred that the effect of the selected adhesive is such that the state of the surface of the sheath cannot affect the adhesion. This may be illustrated by the possible presence of fats on the sheath caused by the loose parts of meat in the boiling water.

Research has shown that by using acrylate adhesives all the above-mentioned requirements can be met. It appears that the so-called cyanoacrylate adhesives, some of which also being known as 'fast-setting' adhesives, do extremely serve the purpose.

The invention also relates to a method of producing a food product, being sausage-shaped in particular, wherein a portion of a tubular, seamless sheath that is particularly made of shrink-foil, such as PVDC shrink foil, is filled with an edible substance, and only then a pull strip or opening strip is adhered to the outer surface of said portion of said sheath by means of a fast-setting adhesive, as descibed in claim 4.

The invention will be illustrated below with reference to an exemplary embodiment represented in the accompanying drawings.

Figure 1 shows an isometric view of a sausage according to the invention, prior to use.

Figure 2 shows the sausage of figure 1 when it is being opened.

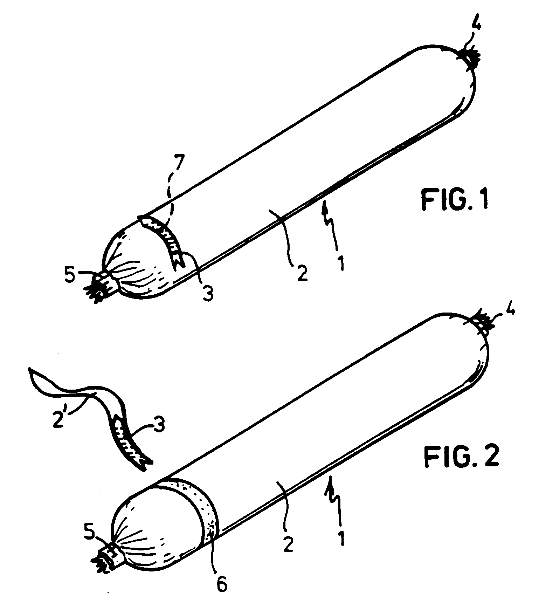

Figure 1, in which a sausage 1 according to the invention is represented, shows the tubular sheath 2 which is closed at both ends by means of small clips 4 and 5. A pull strip 3, which is made of a material having more strength than the material of the sheath 2, has been stuck to the sheath by means of a very thin layer of adhesive 7, one end of the pull strip being free to be gripped by the consumer.

In the state of the sausage represented in figure 2 the consumer has already pulled the pull strip 3, whereby the local portion 2' of the sheath is pulled loose, as the adhesion strength of the adhesive 7 exceeds the strength of the material of the sheath 2, and as a result the part of the contents 6 of the sausage that was covered by said portion 2' is exposed. Now the consumer can easily continue opening the sausage by shifting the thus obtained smaller portion of the sheath sidewards and subsequently by pressing the sausage at the other end of the sheath, so that the contents 6 is pressed out of the remaining larger portion of the sheath 2.

Tests were carried out on sausages which were approximately 40 grams in weight and included a sheath of PVDC having a wall thickness of 40 »m, as well as a pull strip of PVC having a wall thickness of 200 »m, a cyanoacrylate adhesive being used as adhesive. The outcome of these tests was considered very satisfactory. It appeared that the pull strips could be applied in a very simple and rapid manner, and that the sheath could be opened by children without any problem.

## Claims

1. Food product comprising a foil-like sheath (2) as well as an edible substance (6) enveloped therein, wherein the sheath (2) is constituted by a seamless tube of synthetic material, **characterized in that** at least one strip (3) is adhered to the outer surface of said sheath by means of an acrylate adhasive (7), preferably a cyanoacrylate adhesive, wherein the strength of the adhesion is of such an extent that the removal of a strip results in local opening of the sheath.

2. Food product according to claim 1, wherein the strip (3) extends in the circumferential direction of the tubular sheath (2).

3. Food product according to claim 1 or 2, wherein the sheath (2) is made of synthetic material such as PVDC, nylon, polyester, and the like.

4. Method of producing a food product, being sausageshaped in particular, wherein a portion of a tubular, seamless sheath that is particularly made of synthetic shrink-foil, such as PVDC shrink foil, is filled with an edible substance, and only then a pull strip or opening strip is adhered to the outer surface of said portion of said sheath by means of a fast-setting acrylate adhesive, preferably a cyanoacrylate adhesive, wherein the strength of the adhesion is of such an extent that the removal of the strip results in local opening of the sheath.

## Patentansprüche

1. Lebensmittelprodukt mit einer folienartigen Hülle (2) und mit einer darin eingehüllten eßbaren Substanz (6), worin die Hülle (2) als nahtlosen Schlauch von synthetischem Material gebildet ist, **dadurch gekennzeichnet**, daß zumindest ein Streifen (3) durch einen Acrylklebstoff (7), vorzugsweise Cyanacrylatklebstoff, an der äußeren Oberfläche der Hülle geklebt ist, wobei die Stärke der Haftung solchermaßen ist, daß die Entfernung des Streifens eine örtliche Öffnung der Hülle zur Folge hat.

2. Lebensmittelprodukt nach Anspruch 1, wobei sich der Streifen (3) in die peripherale Richtung der schlauchförmigen Hülle (2) erstreckt.

3. Lebensmittelprodukt nach Anspruch 1 oder 2, wobei die Hülle (2) aus synthetischem Material wie PVDC, Nylon, Polyester, oder ähnliches gemacht ist.

4. Verfahren um ein, insbesondere wurstförmiges, Lebensmittelprodukt herzustellen, wobei ein Teil einer schlauchförmigen, nahtlosen Hülle, die besonders aus synthetischer Schrumpffolie, wie PVDC Schrumpffolie, gemacht ist, mit einer eßbaren Substanz gefüllt ist, und erst dann einen Zieh- oder Öffnungsstreifen an der äußeren Oberfläche des Hüllenteils mittels eines schnell aushärtenden Acrylatklebstoffes, vorzugsweise ein Cyanacrylatklebstoff, gehaftet wird, wobei die Stärke der Haftung solchermaßen ist, daß die Entfernung des Streifens eine örtliche Öffnung der Hülle zur Folge hat.

## Revendications

1. Produit alimentaire comportant un fourreau de type film (2) ainsi qu'une substance comestible (6) enveloppée à l'intérieur, dans lequel le fourreau (2) est constitué d'un tube sans couture en matière synthétique, caractérisé en ce qu'au moins une languette (3) est collée à la surface externe dudit fourreau au moyen d'un adhésif de type acrylate (7), de préférence un adhésif de type cyanoacrylate, pour lequel la force d'adhérence est d'une intensité telle que le retrait d'une languette entraîne une ouverture locale du fourreau.

2. Produit alimentaire selon la revendication 1, dans lequel la languette (3) s'étend dans la direction de la circonférence du fourreau tubulaire (2).

3. Produit alimentaire selon la revendication 1 ou 2 dans lequel le fourreau (2) est en matière synthétique telle que PVDC, Nylon, polyester et équivalent.

4. Procédé de fabrication d'un produit alimentaire, en particulier en forme de saucisse, dans lequel une partie d'un fourreau tubulaire sans couture qui, en particulier, est en film synthétique rétractable tel que film rétractable en PVDC, est garnie d'une substance comestible et, seulement après une languette de tirage ou une languette d'ouverture est collée sur la surface externe de ladite partie dudit fourreau au moyen d'un adhésif à durcissement rapide de type acrylate, de préférence un adhésif de type cyanoacrylate, pour lequel la force d'adhérence est d'une intensité telle que le retrait de la languette entraîne en une ouverture locale du fourreau.
